# EUROPEAN PATENT SPECIFICATION

(11) **EP 1 656 825 B1**
(45) Date of publication and mention of the grant of the patent: **18.04.2018**
(21) Application number: 05024470.6
(22) Date of filing: 09.11.2005
(51) Int. Cl.: A01D 43/063

(54) **Lawn mower**
Rasenmäher
Tondeuse à gazon

(30) Priority: 10.11.2004 IT VI20040259
(43) Date of publication of application: 17.05.2006
(73) Proprietor: MULTIONE SRL, 36040 Grumolo delle Abbadesse (VI) (IT)
(72) Inventor: Zanini, Stefano, 36040 Grumolo Delle Abbadesse (Vicenza) (IT)
(74) Representative: Forattini, Amelia

(56) References cited:
- EP-A- 0 676 128
- EP-A- 0 759 268
- DE-A1- 4 336 821
- DE-U1- 29 800 014
- FR-A- 2 773 046
- FR-A- 2 814 637
- GB-A- 2 298 775
- US-A- 3 736 736
- US-A- 4 069 649

## Description

The present invention relates to a lawn mower.

As is known, there are many kinds of lawn mower for tending gardens, parks and more generally for maintaining green areas.

The most widespread and efficient models commercially available are constituted essentially by a mowing plate, in which one or more rotating blades mow the grass that exceeds a certain height with respect to the ground and subsequently collect it in adapted collectors.

In order to avoid damaging the lawn and achieve a better qualitative result, the grass produced as a residue of mowing is in fact generally conveyed into baskets or containers which are connected to the mowing plate.

In smaller lawn mowers, which are used in homes and are generally provided with a single blade, the mowed grass is conveyed both by means of the air stream produced by the rotation of the blade and by means of the mechanical action performed by the blade.

This solution is well-suited for tools for tending small gardens and collecting small amounts of mowed grass, but does not offer a sufficient performance in lawn mowers suitable for more extensive use.

If the rotating blades are at least two, in order to reduce execution times and increase the effectiveness of the lawn mower, or if it is necessary to work in unfavorable conditions in terms of humidity and grass height, the mechanical action on its own, combined with the air stream generated by the rotating blades, is no longer sufficient to aspirate and collect effectively the mowing residues.

For this purpose, the largest lawn mowers are generally provided with a powerful turbine which, through an intake channel, aspirates the air, conveying it into the collection basket.

This kind of solution has in any case several drawbacks, the first of which is the scarcely convenient utilization of the volume available in the collector, in which many voids always remain among the various grass residues that are present.

Further limitations of efficiency arise if the conditions in terms of humidity and height of the grass become truly critical.

In these cases, the grass very often forms lumps consequently reducing the useful diameter of the intake channel and clogging the entire system.

A further drawback is linked to the high rotation rate of the turbine which, by moving considerable amounts of air, lifts a lot of dust and generates great amounts of noise.

EP-A-759268 discloses a lawn mower provided with multiple cutting blades connected to a container of the mowed grass through a conduit which includes a screw feeder.

The aim of the invention is to solve the problems described above by providing a lawn mower which allows to utilize in an optimum manner the space available in the collector and also allows to work effectively even in case of tall or wet grass.

A particular object of the invention is to provide a lawn mower which is particularly versatile and can be used in different types of tractor and movement unit.

A further object of the invention is to provide a lawn mower which is sturdy and safe and can be manufactured at competitive costs.

This aim and these and other objects, which will become better apparent hereinafter, are achieved by a lawn mower as claimed in the appended claims**.**

Further characteristics and advantages will become better apparent from the description of two preferred but not exclusive embodiments of a lawn mower according to the invention, illustrated by way of non-limiting example in the accompanying drawings, wherein:
Figure 1 is a perspective view of a lawn mower according to the invention;
Figure 2 is a partially sectional plan view of a lawn mower according to the invention;
Figure 3 is a side view of a lawn mower according to the invention;
Figure 4 is a partially sectional side view of the lawn mower of Figure 1;
Figure 5 is a partially sectional side view of a further embodiment of a lawn mower according to the invention;
Figure 6 is a view, similar to Figure 1, of the embodiment of the lawn mower of Figure 5.

With reference to the cited figures, the lawn mower according to the invention, generally designated by the reference numeral 101, comprises a mowing plate 2 which accommodates a cutting means constituted, in the specific case, by three rotating blades 3a, 3b and 3c, that lie on the same imaginary plane and are arranged so that their rotation axes are positioned respectively at the corners of an imaginary triangle.

The blade 3b is thus extended toward the front part 30 of the mowing plate 2, while the two blades 3a and 3c are in a retracted position and lie proximate to the rear part 40 of the mowing plate 2.

In order to accumulate the mowed grass, above the mowing plate 2 there is a container 4, the bottom of which is at least partially formed by the mowing plate itself and is connected thereto by means of a conveyance duct 5 which is formed substantially at the blade 3b but proximate to the rear part 40 of the mowing plate 2.

According to the invention, there is a motion and compression means 6 adapted to convey the mowed grass into the container 4 and to compress it thereat so as to utilize the available volume in an optimum manner.

In the specific case, the motion and compression means 6 is constituted by a rotating screw feeder 7 which is inserted partially in the conveyance duct 5 and in which the rotation axis is substantially perpendicular to the imaginary plane defined by the rotating blades 3a, 3b and 3c.

The rotating screw feeder 7 is turned by an actuation means which is constituted by a hydraulic motor 8 coupled to the pivot 9 of the rotating screw feeder 7, by means of an elastic coupling, not shown in the figures.

In order to allow the discharge of the mowed grass accumulated in the container 4, an automatically-opening door 10 is activated when a control 11 is operated. Multiple venting openings, not shown in the accompanying figures, are provided on the walls for the outflow of the air introduced in the container 4 after the cutting operations.

The lawn mower can be applied to tractors or telescopic motion units by means of quick-coupling devices 12, connected to a deformable supporting chassis 13 which is articulated to the mowing plate 2 so that the monolithic body constituted by the mowing plate 2 and by the container 4 can oscillate with respect to the pivoting axis 50, remaining in any case in stable equilibrium.

The correct and constant height from the ground of the cutting means is ensured by the presence of four supporting rollers, of which only the rollers 14a and 14b are clearly visible in the accompanying figures, their rotation axis being movable toward or away from the imaginary plane formed by the rotating blades blades 3a, 3b and 3c.

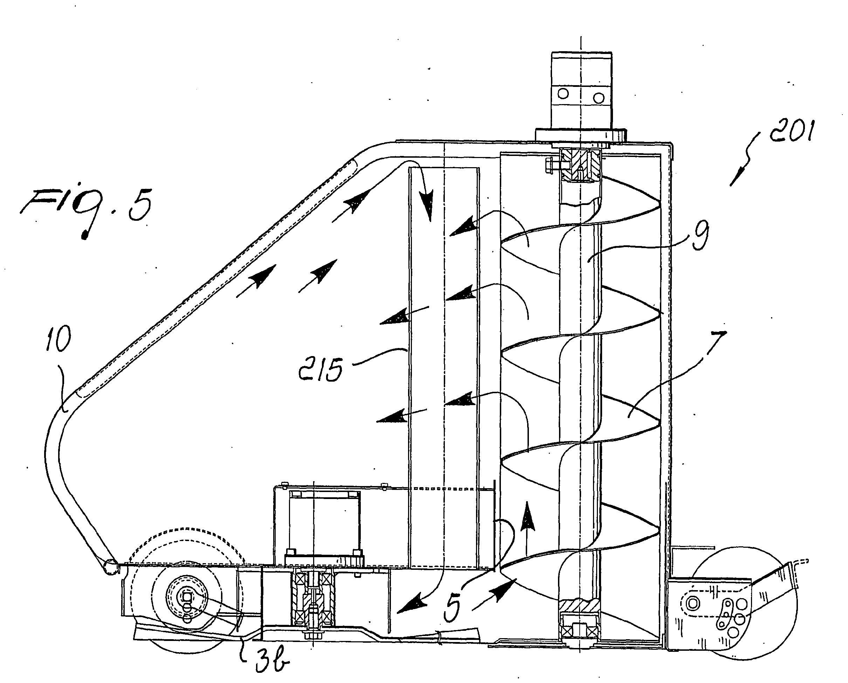

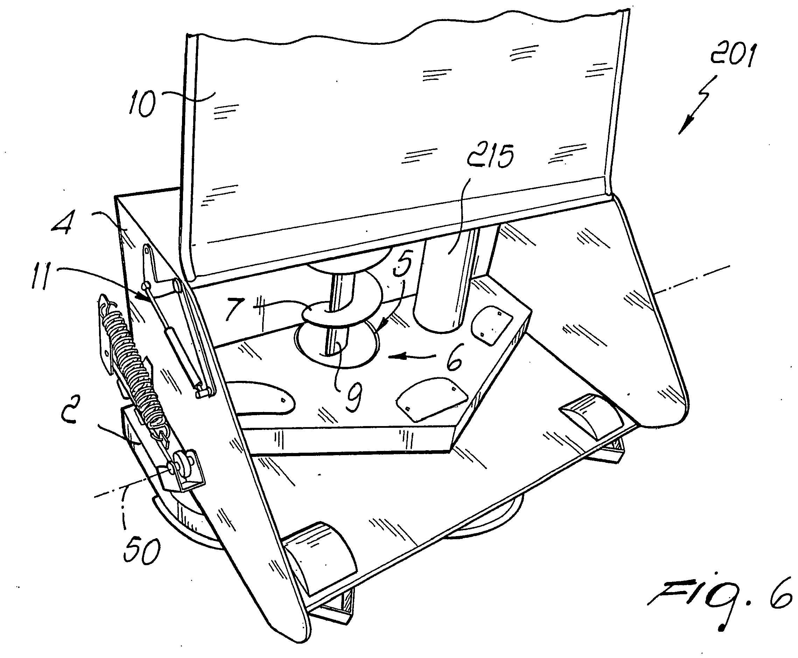

Figures 5 and 6 illustrate a lawn mower, according to a further aspect of the invention, generally designated by the reference numeral 201, wherein for the outflow of the air introduced in the container 4 during the cutting operations, there is a recycling duct 215 formed proximate to the rear part 40 of the mowing plate 2, and substantially at the blade 3a, so as to return the air into the mowing plate 2, producing a continuous recirculation between the container 4 and the mowing plate.

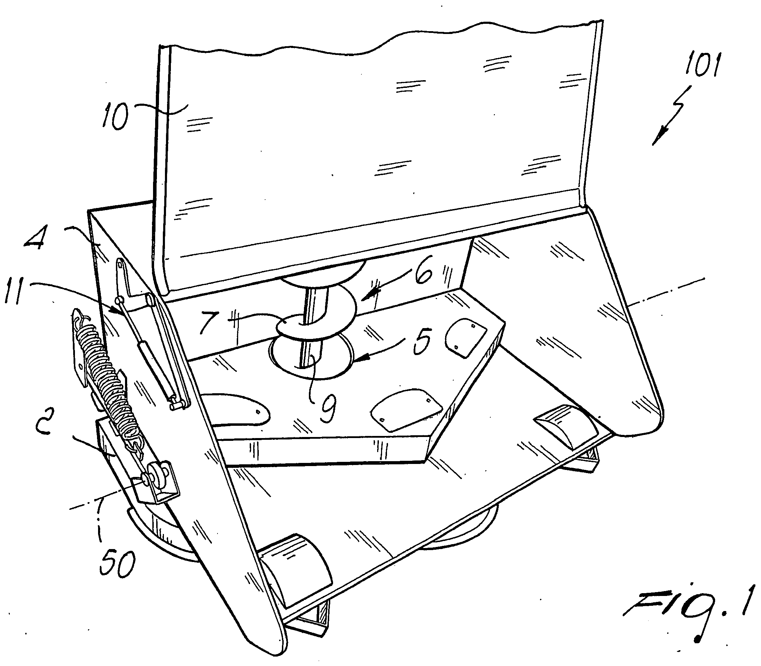

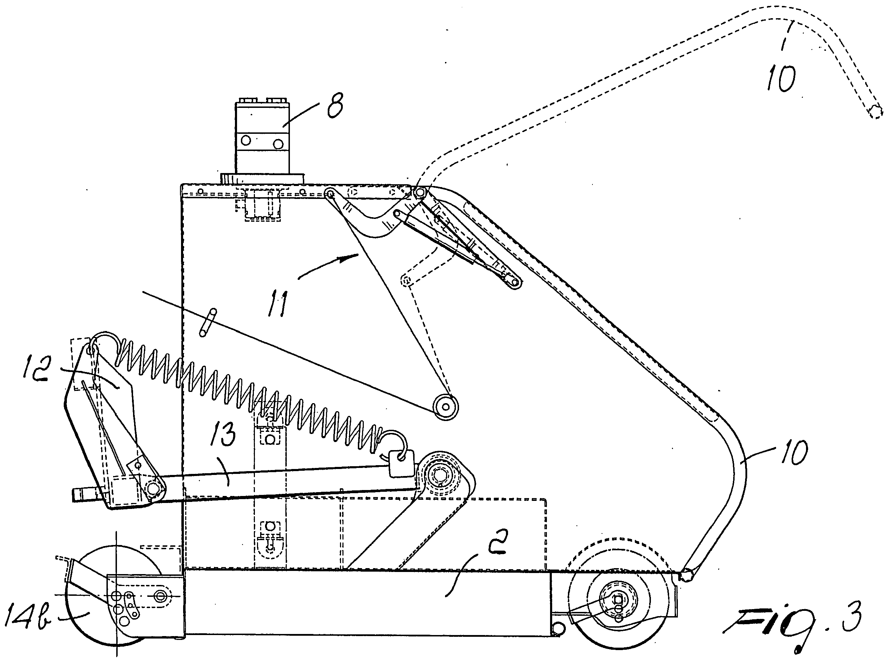

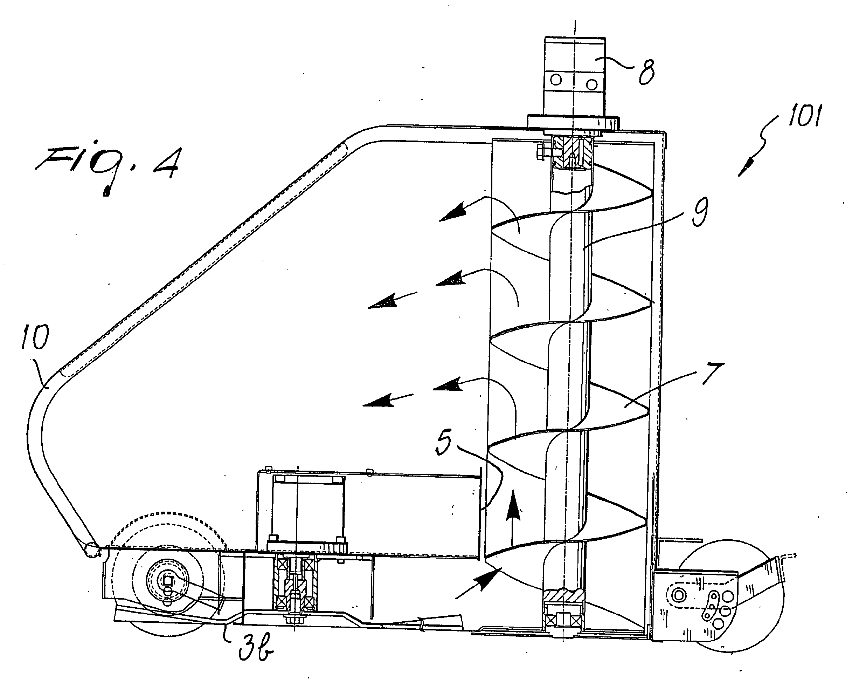

In the embodiment shown in Figures 5 and 6, the parts that correspond to the parts that have already been described with reference to the embodiment shown in Figures 1 to 4, have been designated by the same reference numerals.

The operation of the lawn mower according to the invention is as follows.

The lawn mower, coupled to a tractor or to the arm of a motion unit, is rested on the ground so that the four supporting rollers can ensure a certain uniformity in the cutting height, which is set by the operator after appropriately adjusting the distance of the rotation axes from the imaginary plane formed by the rotating blades 3 a, 3b, 3c.

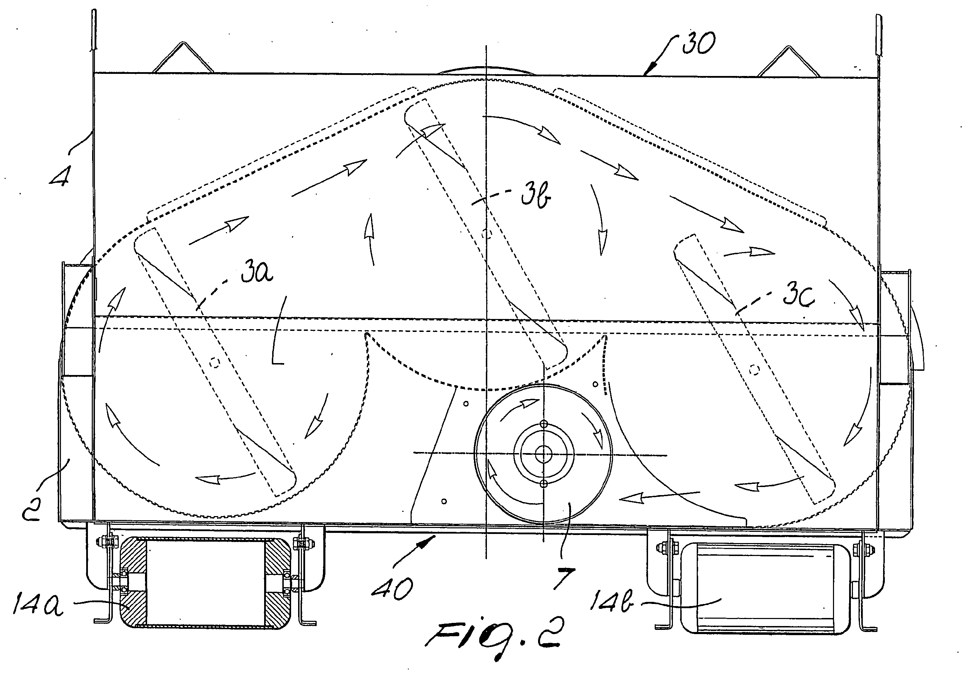

Because of the arrangement of the blades and of their rotation in the same direction, a circulating stream of air is generated inside the mowing plate 2 and starts from the blade 3a, reaches the blade 3b, and finally the blade 3c, as shown in Figure 2.

This air stream, together with the mechanical propelling action of the blades, conveys the mowed grass proximate to the conveyance duct 5, where the rotating screw feeder 7, driven by the hydraulic motor 8, mechanically lifts the mowed grass and distributes and compresses it within the container 4.

In the first of the two embodiments, the air introduced in the container 4 is vented successively through venting openings, while in the embodiment shown in Figures 5 and 6 the air returns through the recirculation duct 215 to the mowing plate 2, substantially at the blade 3a, which starts the circulating flow, stream, thus creating a continuous recirculation.

The grass accumulated and pressed within the container 4 can be conveniently evacuated by lifting the lawn mower and varying the inclination of the imaginary plane formed by the rotating blades 3a, 3b and 3c with respect to the ground, thus causing the opening of the automatically-opening door 10 and the consequent fall of the various cutting residues.

In practice it has been found that the lawn mower according to the invention fully achieves the intended aim, being capable of working effectively even in case of tall or wet grass and ensures the possibility to utilize in the best possible way the space available within the collector.

The lawn mower thus conceived is susceptible of numerous modifications and variations, within the scope of the claims.

All the details may be replaced with other technically equivalent elements.

In practice, the materials used, so long as they are compatible with the specific use, as well as the contingent shapes and dimensions, may be any according to the requirements and the state of the art.

## Claims

1. A lawn mower comprising a mowing plate (2) provided with a cutting means (3a, 3b, 3c), at least one container (4) for accumulating the mowed grass, said mowing plate (2) being connected to said container (4) by means of at least one conveyance duct (5), a motion and compression means (6) adapted to convey and compress said mowed grass inside said container, said motion and compression means comprising at least one rotating screw feeder (7) at least partially arranged within said conveyance duct (5), said rotating screw feeder (7) being turned by an actuation means (8), said cutting means comprising three rotating blades (3a, 3b, 3c) that are coplanar and have respective rotation axes that are arranged substantially at the corners of an imaginary triangle; said lawn mower being **characterized in that** said conveyance duct (5) is arranged within said container, said rotating screw feeder (7) having a rotation axis which is substantially perpendicular to an imaginary plane formed by said cutting means (3a, 3b, 3c), said screw feeder (7) extending from said mowing plate (2) directly into said container (4) substantially up to the top of said container (4).

2. The lawn mower according to claim 1, **characterized in that** said actuation means comprises at least one hydraulic motor (8) coupled to said screw feeder (7).

3. The lawn mower according to claim 1, **characterized in that** said container (4) comprises at least one automatically-opening door (10) in order to allow the discharge of said mowed grass.

4. The lawn mower according to claim 1, **characterized in that** it comprises a deformable supporting chassis (13) articulated to said mowing plate (2).

5. The lawn mower according to claim 4, **characterized in that** said deformable supporting chassis (13) comprises quick-coupling devices (12).

6. The lawn mower according to claim 1, **characterized in that** it comprises at least one recirculation duct (215) adapted to generate a stream of air which is directed from said container (4) towards said mowing plate (2).

## Patentansprüche

1. Ein Rasenmäher, der Folgendes umfasst: eine mit einem Schneidmittel (3a, 3b, 3c) ausgestattete Schneidplatte (2), mindestens einen Behälter (4) zum Sammeln des gemähten Grases, wobei die Schneidplatte (2) über mindestens eine Förderleitung (5) mit dem Behälter (4) verbunden ist, ein Bewegungs- und Kompressionsmittel (6), ausgebildet, um das gemähte Gras in den Behälter zu befördern und zu komprimieren, wobei das Bewegungs- und Kompressionsmittel mindestens einen rotierenden Schneckenförderer (7) umfasst, der zumindest teilweise innerhalb der Förderleitung (5) angeordnet ist, wobei der rotierende Schneckenförderer (7) von einem Antriebsmittel (8) gedreht wird, wobei die Schneidmittel drei Drehklingen (3a, 3b, 3c) umfassen, die koplanar sind und entsprechende Drehachsen haben, die im Wesentlichen an den Ecken eines imaginären Dreiecks angeordnet sind, wobei der Rasenmäher **dadurch gekennzeichnet ist, dass** die Förderleitung (5) innerhalb des Behälters angeordnet ist, wobei der rotierende Schneckenförderer (7) eine Drehachse hat, die im Wesentlichen senkrecht zu einer imaginären Ebene ist, welche von den Schneidmitteln (3a, 3b, 3c) gebildet wird, wobei der Schneckenförderer (7) sich von der Schneidplatte (2) direkt in den Behälter (4), im Wesentlichen bis zum oberen Ende des Behälters (4), erstreckt.

2. Der Rasenmäher gemäß Anspruch 1, **dadurch gekennzeichnet, dass** das Antriebsmittel mindestens einen mit dem Schneckenförderer (7) gekoppelten Hydraulikmotor (8) umfasst.

3. Der Rasenmäher gemäß Anspruch 1, **dadurch gekennzeichnet, dass** der Behälter (4) mindestens eine sich automatisch öffnende Tür (10) umfasst, um das Abladen des gemähten Grases zu ermöglichen.

4. Der Rasenmäher gemäß Anspruch 1, **dadurch gekennzeichnet, dass** er ein verformbares Traggestell (13) umfasst, das gelenkig mit der Schneidplatte (2) verbunden ist.

5. Der Rasenmäher gemäß Anspruch 4, **dadurch gekennzeichnet, dass** das verformbare Traggestell (13) Schnellkopplungsvorrichtungen (12) umfasst.

6. Der Rasenmäher gemäß Anspruch 1, **dadurch gekennzeichnet, dass** er mindestens eine Rezirkulationsleitung (215) umfasst, ausgebildet, um einen Luftstrom zu erzeugen, der von dem Behälter (4) zu der Schneidplatte (2) gelenkt wird.

## Revendications

1. Tondeuse à gazon comprenant un plateau de coupe (2) doté d'un moyen de coupe (3a, 3b, 3c), au moins un réceptacle (4) pour accumuler l'herbe tondue, ledit plateau de coupe (2) étant raccordé audit réceptacle (4) au moyen d'au moins un conduit de transport (5), un moyen de déplacement et de compression (6) adapté pour transporter et comprimer ladite herbe tondue à l'intérieur dudit réceptacle, ledit moyen de déplacement et de compression comprenant au moins un alimenteur à vis rotatif (7) au moins partiellement disposé à l'intérieur dudit conduit de transport (5), ledit alimenteur à vis rotatif (7) tournant grâce à un moyen d'actionnement (8), ledit moyen de coupe comprenant trois lames rotatives (3a, 3b, 3c) qui sont coplanaires et ont des axes de rotation respectifs disposés sensiblement au niveau des angles d'un triangle imaginaire; ladite tondeuse à gazon **se caractérisant en ce que** ledit conduit de transport (5) est disposé à l'intérieur dudit réceptacle, ledit alimenteur à vis rotatif (7) ayant un axe de rotation sensiblement perpendiculaire à un plan imaginaire formé par ledit moyen de coupe (3a, 3b, 3c), ledit alimenteur à vis (7) s'étendant à partir dudit plateau de coupe (2) directement à l'intérieur dudit réceptacle (4) sensiblement jusque vers le haut dudit réceptacle (4).

2. Tondeuse à gazon selon la revendication 1, **caractérisée en ce que** ledit moyen d'actionnement comprend au moins un moteur hydraulique (8) couplé avec ledit alimenter à vis (7).

3. Tondeuse à gazon selon la revendication 1, **caractérisée en ce que** ledit réceptacle (4) comprend au moins une porte à ouverture automatique (10) afin de permettre la décharge de ladite herbe tondue.

4. Tondeuse à gazon selon la revendication 1, **caractérisée en ce qu'**elle comprend un châssis de support déformable (13) articulé par rapport audit plateau de coupe (2).

5. Tondeuse à gazon selon la revendication 4, **caractérisée en ce que** ledit châssis de support déformable (13) comprend des dispositifs de raccord rapide (12).

6. Tondeuse à gazon selon la revendication 1, **caractérisée en ce qu'**elle comprend au moins un conduit de recirculation (215) adapté pour générer un courant d'air orienté à partir dudit réceptacle (4) vers ledit plateau de coupe (2).
